Europäisches Patentamt

European Patent Office

Office européen des brevets

(11) Veröffentlichungsnummer: **0 343 458**
**A1**

## EUROPÄISCHE PATENTANMELDUNG

(21) Anmeldenummer: 89108607.6

(22) Anmeldetag: 12.05.89

(51) Int. Cl.⁴: **H02P 9/34**

(30) Priorität: 24.05.88 DE 3817596

(43) Veröffentlichungstag der Anmeldung:
29.11.89 Patentblatt 89/48

(84) Benannte Vertragsstaaten:
DE FR GB SE

(71) Anmelder: **Siemens Aktiengesellschaft**
**Wittelsbacherplatz 2**
**D-8000 München 2(DE)**

(72) Erfinder: **Rosenberg, Heinz, Dipl.-Ing.**
**Dr. Fidlerweg 15**
**A-2752 Wöllersdorf(AT)**

(54) **Permanentmagneterregte elektrische Maschine mit einer Anordnung zur elektrischen Feldschwächung.**

(57) Die Erfindung betrifft eine permanentmagneterregte elektrische Maschine mit einer Anordnung zur elektrischen Feldschwächung. Besondere Regler zur Steuerung der Feldschwächung lassen sich dadurch, vermeiden, daß mindestens ein Stromkreis vorgesehen ist, der einen feldschwächenden, von einer Wechselspannungsquelle herrührenden Strom führt und eine von diesem Strom durchflossene, in ihrer Induktivität veränderlich steuerbare Sättigungsdrossel (4) enthält, deren Steuerstrom von dem als Steuerspannung wirkenden Teil, um den eine von der in der Maschine (1) induzierten und gleichgerichteten Spannung proportional abgeleitete Spannung eine entgegenwirkende Referenzspannung übersteigt, erzeugt ist.

FIG 1

EP 0 343 458 A1

## Permanentmagneterregte elektrische Maschine mit einer Anordnung zur elektrischen Feldschwächung

Die Erfindung betrifft eine permanentmagneterregte elektrische Maschine mit einer Anordnung zur elektrischen Feldschwächung. Eine solche Feldschwächung kann durch induktive Belastung und/oder Vormagnetisierung aktiver Eisenteile der Maschine bewirkt werden.

Bei permanentmagneterregten elektrischen Maschinen, deren Permanentmagnetflüsse ungeschwächt bleiben, ändert sich die von diesen Flüssen induzierte Spannung verhältnisgleich mit der Drehzahl. Bei Generatoren dieser Art, die mit weitgehend veränderlicher Drehzahl betrieben werden und ihre Leistung mit praktisch konstanter Spannung abgeben sollen - z.B. Bordgeneratoren von Fahr- und Flugzeugen, Wind- und Wasserkraftgeneratoren ungeregelter Drehzahl - erfordert dies die Vorschaltung einer aufwendigen Leistungselektronik, um die induzierte Generatorspannung auf den vorgeschriebenen Wert umzuformen. Auch bei permanentmagneterregten Generatoren, die zwar mit wenig veränderlicher Drehzahl, jedoch in einem weiten Belastungsspielraum arbeiten sollen (z.B. Notstromaggregate) schwankt ohne fallweise Feldschwächung die Spannung für unmittelbaren Verbraucheranschluß zu stark. Permanentmagneterregte, von einem Stromrichter zu speisende Motoren für einen größeren Drehzahlbereich benötigen ohne Feldschwächung vielfach einen so großen Spannungsbereich, daß die Typenleistung des Stromrichters eine hinsichtlich Wirtschaftlichkeit und Raumbedarf sehr nachteilige Größe erreicht.

Eine elektrische Feldschwächung ist bei permanentmagneterregten elektrischen Maschinen sowohl durch induktive Belastung als auch durch mittels Vormagnetisierung bewirkter Sättigung aktiver Eisenteile erzielbar. In beiden Fällen ist ein feldschwächender Wechsel- bzw. Gleichstrom erforderlich, dessen Stärke der jeweils benötigten Feldschwächung angepaßt sein muß.

Der Erfindung liegt die Aufgabe zugrunde, besondere Regler, die erst über die Erfassung der jeweiligen Spannung bzw. Drehzahl oder Belastung der Maschine den feldschwächenden Strom steuern, zu vermeiden.

Die Lösung der gestellten Aufgabe gelingt nach der Erfindung dadurch, daß mindestens ein Stromkreis vorgesehen ist, der einen feldschwächenden, von einer Wechselspannungsquelle herrührenden Strom führt und eine von diesem Strom durchflossene, in ihrer Induktivität veränderlich steuerbare Sättigungsdrossel enthält, deren Steuerstrom von dem als Steuerspannung wirkenden Teil, um den eine von der in der Maschine induzierten und gleichgerichteten Spannung proportional abgeleitete Spannung eine entgegenwirkende Referenzspannung übersteigt, erzeugt ist. Als Referenzspannung kann sowohl die Spannung einer Batterie als auch die Durchbruchspannung zumindest einer Zener-Diode vorgesehen sein.

Durch die erfindungsgemäße Anordnung wird erreicht, daß mit Anwachsen der Maschinenspannung über den der Referenzspannung entsprechenden Wert sich ein mit der Maschinenspannung steil zunehmender Steuerstrom der Sättigungsdrosseln einstellt, so daß deren Induktivität entsprechend sinkt, wodurch der feldschwächende Strom ansteigt und damit die Maschinenspannung begrenzt. Vorzugsweise wird als Wechselspannungsquelle für zumindest einen feldschwächenden Strom die Maschine selbst herangezogen, womit dieser durch eine Sättigungsdrossel gesteuerte Strom eine induktive Belastung der Maschine und dadurch eine Feldschwächung ergibt. Fallweise werden Wicklungen der Maschine über einen den Sättigungsdrosseln nachgeschalteten Gleichrichter derart gespeist, daß sich eine Vormagnetisierung von aktiven Eisenteilen, also eine Feldschwächung durch Sättigung einstellt.

Anhand in der Zeichnung dargestellter Ausführungsbeispiele wird die Erfindung nachfolgend näher erläutert. Es zeigt:

FIG 1 eine Schaltung zur Feldschwächung einer permanentmagneterregten einphasigen Synchronmaschine durch induktive Belastung, mit einer Batterie als Referenzspannungsquelle,

FIG 2 eine Magnetsierungskurve eines aus üblichem Transformatorblech bestehenden Kernes einer Sättigungsdrossel,

FIG 3 eine Magnetisierungskurve eines aus einem Werkstoff mit rechteckiger Hystereseschleife bestehenden Kernes einer Sättigungsdrossel,

FIG 4 zwei Sättigungsdrosseln mit je einer vorgeschalteten Diode,

FIG 5 zwei Sättigungsdrosseln mit je einer vorgeschalteten Diode und einer gemeinsamen Steuerstromwicklung,

FIG 6 zwei Schnittbandkerne für Sättigungsdrosseln nach FIG 4 oder FIG 5,

FIG 7 zwei Sättigungsdrosseln mit je einer vorgeschalteten Diode und einem gemeinsamen, die Steuerstromwicklung tragenden Kern,

FIG 8 zwei Sättigungsdrosseln mit je einer vorgeschalteten Diode, einem gemeinsamen, die Steuerstromwicklung tragenden Kern und magnetischen Streupfaden,

FIG 9 eine Schaltung zur Feldschwächung eines permanentmagneterregten, die Verbraucher über einen Gleichrichter speisenden Drehstromgenerators mit einer Zener-Diode als Referenzspannungsquelle,

FIG 10 eine Wicklungsanordnung einer einphasigen Maschine,

FIG 11 eine Schaltung zur Feldschwächung durch Vormagnetisierung aktiver Eisenteile einer Maschine mit einer Wicklungsanordnung nach FIG 10,

FIG 12 eine Wicklungsanordnung einer Drehstrommaschine,

FIG 13 eine Schaltung zur Feldschwächung durch Vormagnetisierung aktiver Eisenteile einer Maschine mit einer Wicklungsanordnung nach FIG 12,

FIG 14 eine Variante der Schaltung nach FIG 13,

FIG 15 eine weitere Variante der Schaltung nach FIG 13,

FIG 16 eine Schaltung für eine Maschine mit einer Wicklungsanordnung nach FIG 12, bei der die feldschwächenden Ströme sowohl durch Vormagnetisierung aktiver Eisenteile als auch durch induktive Belastung der Maschine wirken,

FIG 17 und 18 den Stromverlauf in Sättigungsdrosseln mit vorgeschalteter Diode,

FIG 19 eine Variante der Schaltung nach FIG 16,

FIG 20 eine Wicklungsanordnung einer Drehstrommaschine,

FIG 21 eine Schaltung für eine Maschine mit einer Wicklungsanordnung nach FIG 20, bei der die feldschwächenden Ströme sowohl durch Vormagnetisierung aktiver Eisenteile als auch durch induktive Belastung der Maschine wirken,

FIG 22 eine Schaltung zur Feldschwächung einer Drehstromaschine, bei der ein feldschwächender Strom eine Wicklung außerhalb des Ankers speist, die in der Maschine einen homopolaren, aktive Eisenteile vormagnetisierenden Magnetfluß erzeugt,

FIG 23 einen schematischen Längsschnitt durch eine Maschine mit einer von einem feldschwächenden Strom gespeisten, einen homopolaren Magnetfluß erzeugenden Wicklung außerhalb des Ankers,

FIG 24 einen schematischen Längsschnitt durch eine Maschine mit zwei Ständerblechpaketen und einer dazwischen angeordneten, von einem feldschwächenden Strom gespeisten, einen homopolaren Magnetfluß erzeugenden Wicklung,

FIG 25 einen Querschnitt durch einen mit Permanentmagneten bestückten Maschinenläufer, bei dem ein homopolarer Magnetfluß eine Feldschwächung bewirkt,

FIG 26 einen Querschnitt durch die Eisenteile eines Maschinenläufers anderer Ausbildung, bei dem ein homopolarer Magnetfluß ebenfalls eine Feldschwächung bewirkt.

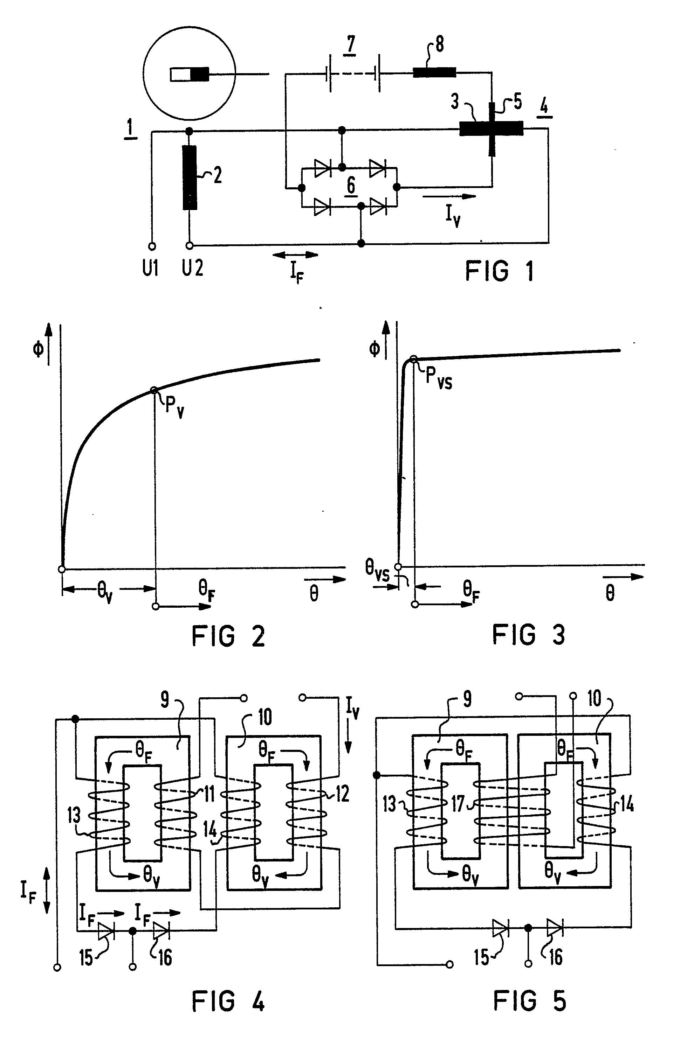

Bei dem Schaltungsbeispiel nach FIG 1 ist die Ankerwicklung 2 eines permanentmagneterregten einphasigen Synchrongenerators 1, der seine Nutzleistung über die Klemmen U1 und U2 an die Verbraucher abgibt, zusätzlich an die Hauptwicklung 3 einer in ihrer Induktivität steuerbaren Sättigungsdrossel 4 angeschlossen. Im Stromkreis der Steuerstromwicklung 5 dieser Sättigungsdrossel 4 sind ein von der Ankerwicklung 2 gespeister Gleichrichter 6, eine diesem entgegengeschaltete Batterie 7 und eine Glättungsdrossel 8 in Reihe angeordnet. Wenn die am Gleichrichter 6 auftretenden Gleichspannung, die der Wechselspannung der Ankerwicklung 2 entspricht, größer wird als die von der Batterie 7 gelieferte Referenzspannung, so fließt ein der Differenz dieser beiden Spannungen verhältnisgleicher Steuerstrom $I_V$ durch die Steuerstromwicklung 5 der Sättigungsdrossel 4. Mit Zunahme dieses Steuerstromes sinkt der induktive Widerstand der Hauptwicklung 3, damit wächst der von dieser Hauptwicklung 3 der Ankerwicklung 2 entnommene Blindstrom und dessen feldschwächende Ankerrückwirkung, wodurch die Generatorspannung begrenzt wird. Da der durch die Hauptwicklung 3 fließende Wechselstrom auch in der Steuerstromwicklung 5 Wechselspannungen induziert und außerdem die Spannung des Gleichrichters 6 Oberschwingungen aufweist, ist die Glättungsdrossel 8 vorgesehen, die die entsprechenden Wechselströme im Steuerstromkreis abdämpft. Es hängt von der Auslegung der Sättigungsdrossel 4 ab, im welchen Ausmaß die Generatorspannung den Wert der durch die Batterie vorgegebenen Referenzspannung übersteigen kann. Wenn schon eine auf die Referenzspannung bezogen sehr kleine Spannungsdifferenz zwischen der Spannung des Gleichrichters 6 und der Batterie 7 eine so starke Abnahme der Induktivität der Sättigungsdrossel 4 bewirkt, daß die entsprechend große induktive Belastung des Synchrongenerators 1 durch den feldschwächenden Strom $I_F$ auch bei höchster Betriebsdrehzahl eine Zunahme dieser Spannungsdifferenz verhindert, dann bleibt die Generatorspannung oberhalb einer Mindestdrehzahl im gesamten Betriebsbereich praktisch konstant und wird nur durch die Höhe der Referenzspannung bestimmt. Eine schwächere Veränderung der Induktivität der Sättigungsdrossel 4, als vorstehend beschrieben, ergibt zwar eine mit der Drehzahl ansteigende, aber keineswegs ihr verhältnisgleiche Generatorspannung.

Die FIG 2 stellt den Verlauf des Magnetflusses $\Phi$ eines aus üblichem Transformatorblech bestehenden Kernes einer Sättigungsdrossel über der magnetischen Durchflutung $\theta$ dar. Die von der Durchflutung $\theta_F$ des feldschwächenden Stromes $I_F$ bewirkten Flußänderungen gehen von dem der durch den jeweiligen Steuerstrom vorgegebenen Vormagnetisierungsdurchflutung $\theta_V$ entsprechenden

Punkt $P_V$ der Magnetisierungskurve aus. Um geradzahlige Oberschwingungen des feldschwächenden Stromes $I_F$ zu vermeiden und einen großen Steuerbereich für die Induktivität der Sättigungsdrossel zu erzielen, ist es zweckmäßig, die Durchflutung $\theta_F$ des feldschwächenden Stromes $I_F$ nur in Richtung der Vormagnetisierung wirken zu lassen, wie dies in FIG 2 durch einen Pfeil 200 angedeutet ist. Da der feldschwächende Strom $I_F$ ein Wechselstrom ist, erfordert dies zwei hinsichtlich des feldschwächenden Stromes $I_F$ parallelgeschaltete Sättigungsdrosseln mit je einer vorgeschalteten Diode.

In FIG 3 ist die Magnetisierungskurve eines aus einem Werkstoff mit rechteckiger Hystereseschleife bestehenden Kernes einer Sättigungsdrossel dargestellt. Hier genügt schon eine sehr kleine Vormagnetisierungsdurchflutung $\theta_{VS}$ um den Sättigungsknickpunkt $P_{VS}$ zu erreichen. Wenn die Durchflutung $\theta_F$ des feldschwächenden Stromes $I_F$ nur in Vormagnetisierungsrichtung wirkt, wie in FIG 3 eingezeichnet, so ergibt eine Vormagnetisierung bis zu dem Sätttigungsknickpunkt $P_{VS}$ eine sehr kleine Induktivität für den feldschwächenden Strom $I_F$. Im Vormagnetisierungsbereich zwischen dem Nullpunkt und dem Sättigungsknickpunkt $P_{VS}$ liegt dagegen die Induktivität entsprechend der Steilheit der Magnetisierungskurve teilweise um eine Größenordnung höher. Demgemäß kann durch Sättigungsdrosselpaare mit vorgeschlateten Dioden und Kernen, die einen Werkstoff mit rechteckiger Hystereseschleife enthalten, mit geringem Vormagnetisierungsaufwand ein sehr großer Bereich der Induktivität ausgesteuert werden. Das ist für die Erzielung einer praktisch eine konstante Spannung der Maschine bewirkenden Feldschwächung günstig.

FIG 4 zeigt schematisch die Eisenkörper 9 und 10 zweier Sättigungsdrosseln, deren Steuerstromwicklungen 11 und 12 hintereinander geschaltet sind, wohingegen die den feldschwächenden Strom $I_F$ führenden Hauptwicklungen 13 und 14 mit den gegensinnig vorgeschalteten Dioden 15 und 16 parallelgeschaltet sind. Die Dioden 15 und 16 bewirken, daß in den Hauptwicklungen 13 und 14 je eine Richtung des feldschwächenden Stromes $I_F$ gesperrt ist und durch die andere Richtung des feldschwächenden Stromes $I_F$ eine Durchflutung $\theta_F$ in Richtung der Vormagnetisierungsdurchflutung $\theta_V$ erzeugt wird.

Die in FIG 5 gezeigte Anordnung zweier Sättigungsdrosseln mit den Eisenkörpern 9 und 10 wirkt gleichartig wie die Anordnung nach FIG 4, jedoch sind die zwei Steuerstromwicklungen 11 und 12 der letzteren durch eine beiden Sättigungsdrosseln gemeinsame Steuerstromwicklung 17 ersetzt, wodurch eine Ersparnis an Wicklungsmetall und Schaltungsaufwand erzielbar ist.

Bei Verwendung eines Werkstoffes mit rechtek-

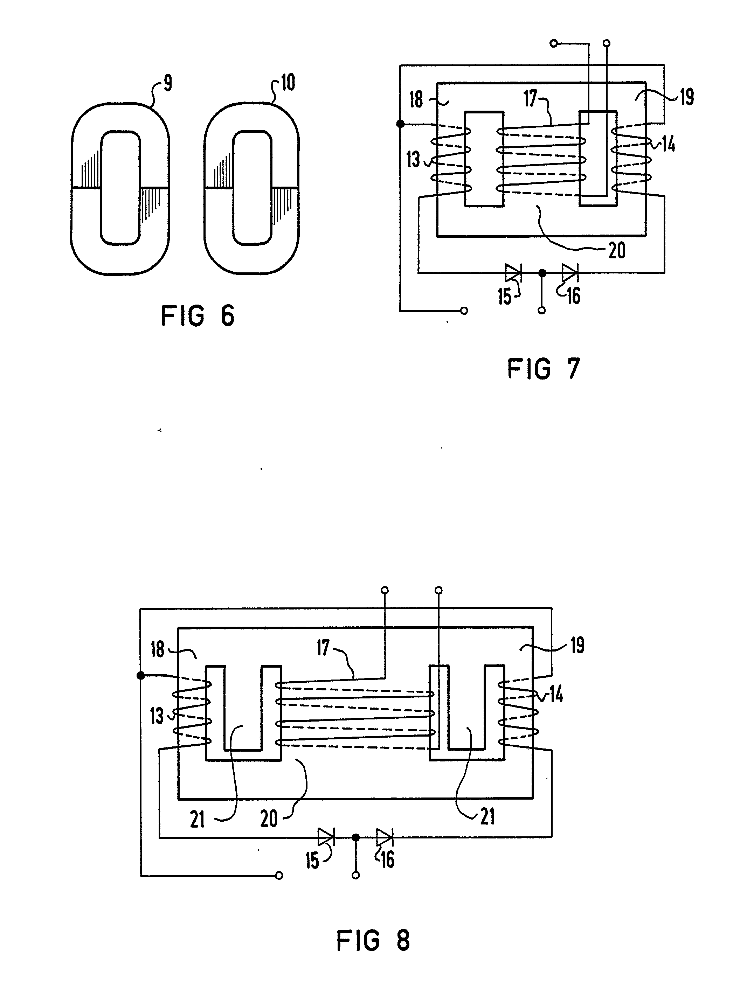

kiger Hystereseschleife ist es zweckmäßig, die Eisenkörper 9 und 10 der in den Figuren 4 und 5 dargestellten Drosseln aus für die betreffenden Blechsorten handelsüblichen Schnittbandkernen gemäß der FIG 6 zu bilden.

In FIG 7 ist eine Variante der Sättigungsdrosseln nach FIG 5 dargestellt. Bei dieser Variante ist anstelle der getrennten Eisenkörper 9 und 10 ein gemeinsamer Eisenkörper mit drei Kernen 18, 19 und 20 vorgesehen. Auf den durch den Steuerstrom sättigbaren Kernen 18 und 19 sind die vom feldschwächenden Strom $I_F$ durchflossenen Hauptwicklungen 13 und 14 angeordnet. Der Kern 20 trägt die gemeinsame Steuerstromwicklung 17. Dieser Kern 20 ist so bemessen, daß er betriebsmäßig immer unge sättigt bleibt, wodurch eine störende gegenseitige Beeinflussung der Hauptwicklungen 13 und 14 vermieden ist.

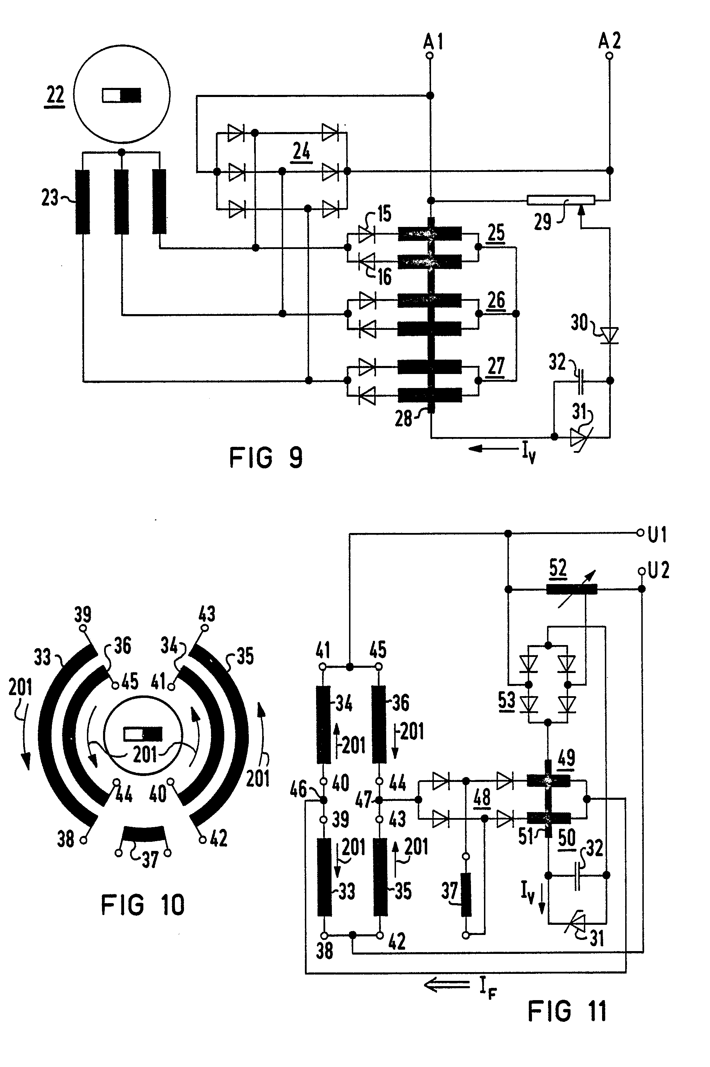

Die Hintereinanderschaltung der Steuerstromwicklungen 11 und 12 nach FIG 4 und ebenso die Vereinigung dieser Steuerstromwicklungen in eine gemeinsame Steuerstromwicklung 17 für die beiden dem feldschwächenden Strom $I_F$ zugeordneten sättigbaren Kerne der Sättigungsdrossel nach FIG 7 besitzt den Vorteil, daß im Steuerstromkreis keine Spannungen mit der Grundfrequenz des feldschwächenden Stromes $I_F$, sondern nur Oberschwingungen induziert werden. Wenn mehrere Sättigungsdrosseln bzw. Sättigungsdrosselpaare für feldschwächende Ströme verschiedener Phasenlage vorgesehen sind, wie z.B. in FIG 9 dargestellt, so heben sich auch diese Oberschwingungen bei Hintereinanderschaltung oder Vereinigung der Steuerstromwicklungen größtenteils auf, wodurch eine Glättungsdrossel 8 gemäß FIG 1 fallweise vermeidbar ist. Eine solche Glättungsdrossel kann auch durch die Ausbildung zumindest einer der Sättigungsdrosseln gemäß FIG 8 ersetzt werden. Es sind hier außer dem ungesättigt bleibenden Kern 20, der die Steuerstromwicklung 17 trägt und den beiden sättigbaren Kernen 18 und 19 für die Hauptwicklungen 13 und 14 des feldschwächenden Stromes $I_F$ noch die Streupfade 21 angeordnet, die Wechselströme im Steuerstromkreis ebenso dämpfen, wie eine gesonderte Glättungsdrossel in diesem Kreis.

In der Anordnung nach FIG 9 speist ein permanentmagneterregter Drehstromgenerator 22 mit seiner Ankerwicklung 23 über einen Gleichrichter 24 die an den Klemmen A1 und A2 angeschlossenen Verbraucher. Die jeweilige Feldschwächung erfolgt durch drei, gemäß FIG 7 oder 8 ausgebildete und an die Ankerwicklung 23 angeschlossene Sättigungsdrosselpaare 25, 26 und 27, die den Drehstromgenerator 22 induktiv belasten. Die Sättigungsdrosselpaare 25 bis 27 haben eine gemeinsame Steuerstromwicklung 28. An den Gleichrichter 24 ist ein mit einem verstellbaren Abgriff versehenes Potentiometer 29 angeschlossen, von dem eine einstellbare Teilspannung abgegriffen wird, die über eine Diode 30 auf eine Zener-Diode 31 und einen zu dieser parallelgeschalteten Glättungskondensator 32 sowie auf die Steuerstromwicklung 28 wirkt. Die Diode 30 sperrt Entladungsströme des Glättungskondensators 32 über das Potentiometer 29. Nach Überschreiten der Durchbruchspannung der Zener-Diode 31 fließt ein Steuerstrom $I_V$. Die Einstellbarkeit der dem Steuerstromkreis zugeführten Spannung mittels des Potentiometers 29 ist einerseits vorgesehen, um eine Anpassung an eine fallweise Abweichung der Durchbruchspannung der Zener-Diode 31 von ihrem Nennwert zu ermöglichen, andererseits, um jene Generatorspannung, bei der die Feldschwächung einsetzen soll, in einem gewissen Bereich verändern zu können.

In FIG 10 ist die auf zwei benachbarte Polteilungen einer permanentmagneterregten einphasigen Synchronmaschine bezogene Lage von vier Teilwicklungen 33 bis 36 dargestellt. Diese Teilwicklungen 33 bis 36, von denen sich jede nur über von gleichpoligen induzierenden Magnetfeldern durchsetzte Teile des Ankerumfanges erstreckt, bilden zusammen den die Nutzleistung abgebenden Teil der Ankerwicklung. Ferner ist im Anker eine getrennte Zusatzwicklung 37 geringer Leistung angeordnet, die den feldschwächenden Strom $I_F$ liefert. Bei Einphasenmaschinen ist eine solche Zusatzwicklung 37 in den von der anderen Wicklung frei bleibenden Ankernuten bequem unterzubringen. Mit 38 bis 45 sind die Anschlußklemmen der Teilwicklungen 33 bis 36 bezeichnet.

FIG 11 zeigt die elektrische Schaltung aller nach FIG 10 vorgesehenen Wicklungen im Zusammenhang mit der Anordnung zur Feldschwächung. Die Teilwicklungen 33 und 34 sind gemäß FIG 10 um eine Polteilung gegeneinander versetzt und, wie aus den Klemmenbezeichnungen hervorgeht, gemäß FIG 11 zu einer Wicklungsgruppe hintereinandergeschaltet. Das gleiche gilt für die Teilwicklungen 35 und 36. Die Teilwicklungen 33 und 36 bzw. 34 und 35 haben am Ankerumfang jeweils die gleiche Lage oder sind bei Maschinen mit gerader Polpaarzahl um zwei Polteilungen gegeneinander versetzt. Bei einer zweipoligen Maschine mit Ringwicklung ist durch FIG 10 die räumliche Lage der einzelnen Teilwicklungen 33 bis 36 abgebildet. Die die gesamte Nutzleistung abgebende Ankerwicklung besteht aus den zwei um eine Polteilung gegeneinander versetzten parallelgeschalteten Wicklungsgruppen 33, 34 und 35, 36 mit den hinsichtlich der induzierten Wechselspannungen äquipotentialen Anschlußpunkten 46 und 47. Der feldschwächende Strom $I_F$ wird von der Zusatzwicklung 37 über einen Brückengleichrichter 48 und den an diesen angeschlossenen Sättigungsdrosseln 49 und 50 geliefert und als Gleichstrom in die äquipotentialen Anschlußpunkte 46, 47 eingespeist. Er erzeugt in den einzelnen Teilwicklungen 33 bis 36 die in den Figuren 10 und 11 durch Pfeile 201 angedeuteten Durchflutungen. Die Ausgangsklemmen U1 und U2 der Maschine sind hinsichtlich des feldschwächenden Stromes $I_F$ äquipotential, somit beeinflußt dieser feldschwächende Strom $I_F$ nicht den äußeren Stromkreis. Ist die Ankerwicklung der Maschine eine Ringwicklung, so weisen die vom feldschwächenden Strom $I_F$ hervorgerufenen Durchflutungen in den vier Teilwicklungen 33 bis 36 die gleiche Umfangsrichtung auf, wie aus FIG 10 ersichtlich und ergeben daher eine Vormagnetisierung des Ankerjoches mit entsprechender Feldschwächung. Ist die Ankerwicklung eine Trommelwicklung, so erzeugt der feldschwächende Strom $I_F$ in allen vier Teilwicklungen 33 bis 36 eine radiale Durchflutung gleicher Richtung und somit einen homopolaren Magnetfluß, der durch die Vormagnetisierung der Ankerzähne und/oder des Läufers feldschwächend wirkt. Durch die Anordnung der den feldschwächenden Strom $I_F$ führenden Hauptwicklungen der Sättigungsdrosseln 49 und 50 innerhalb des Brückengleichrichters 48 werden eigene Vorschaltdioden, siehe beispielsweise die Dioden 15 und 16 in den Figuren 4 bis 9, für diese Hauptwicklungen eingespart. Die einstellbare Sekundärspannung eines von der Ausgangsspannung des Generators gespeisten Spartransformators 52 wird über einen Gleichrichter 53 und die gemeinsame Steuerstromwicklung 51 der Sättigungsdrosseln 49 und 50 der Zener-Diode 31 mit dem parallelgeschalteten Glättungskondensator 32 zugeführt. Der die Durchbruchspannung der Zener-Diode 31 überschreitende und die Steuerspannung bildende Teil dieser Sekundärspannung erzeugt den Steuerstrom $I_V$. Durch die Veränderbarkeit der Übersetzung des Spartransformators 52 ist sowohl eine Anpassung an die Durchbruchspannung der Zener-Diode 31 als auch eine Veränderung jener Generatorspannung, bei deren Überschreitung die Feldschwächung einsetzt, möglich.

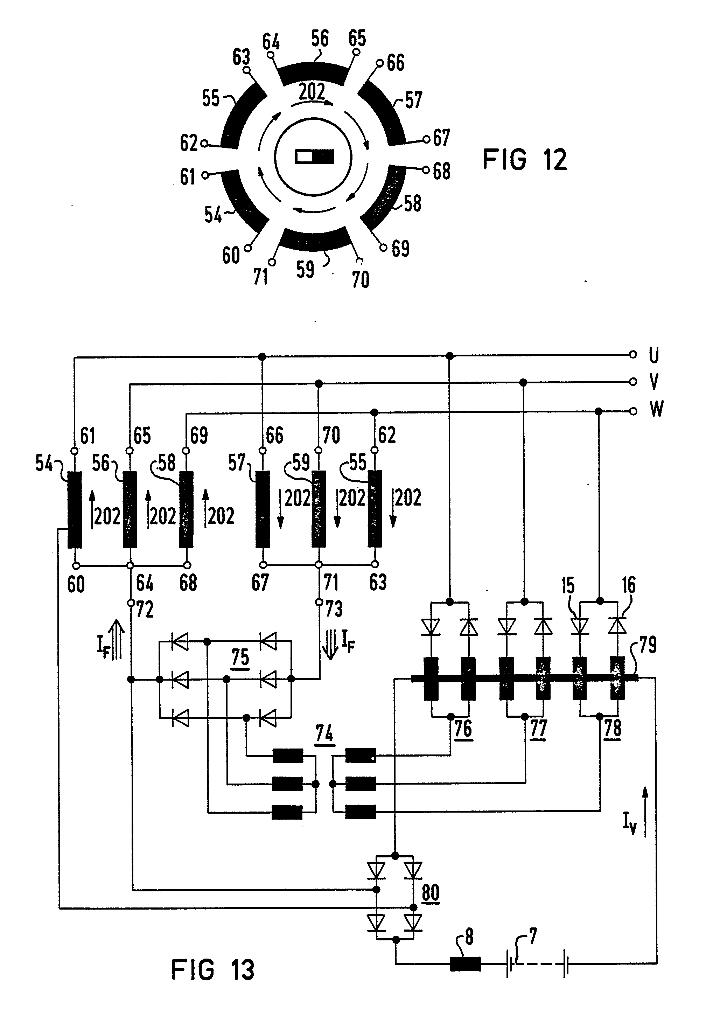

In FIG 12 ist die auf zwei benachbarten Polteilungen einer permanentmagneterregten Drehstrommaschine bezogene Lage von sechs Teilwicklungen 54 bis 59 dargestellt. Jede dieser Teilwicklungen 54 bis 59 erstreckt sich nur über von gleichpoligen induzierenden Magnetfeldern durchsetzte Teile des Ankerumfanges. Die Teilwicklungen 54 bis 59 sind aufeinanderfolgend um jeweils ein Drittel einer Polteilung versetzt angeordnet und bilden, wie durch Vergleich ihrer Klemmenbezeichnungen 60 bis 71 aus FIG 13 hervorgeht, zwei an den Ausgangsklemmen U, V, W parallelgeschaltete, dreisträngige Wicklungsgruppen mit getrennten Sternpunkten 72 und 73. Aus FIG 12 ist ersichtlich, daß die gleichphasigen Teilwicklungen 54, 57 sowie 56, 59 und 58, 55 jeweils um eine Polteilung gegeneinander versetzt angeordnet sind. Die beiden Sternpunkte 72 und 73 sind hinsichtlich der induzierten Wechselspannungen äquipotential. Der feldschwächende Strom $I_F$ wird von der Sekundärwicklung eines Transformators 74 geliefert und über einen Gleichrichter 75 in die Sternpunkte 72 und 73 eingespeist und erzeugt in den Teilwicklungen 54 bis 59 die durch Pfeile 202 angedeuteten Durchflutungen. Bei einer Ausbildung der Teilwicklungen 54 bis 59 als Ringwicklungen haben, wie aus FIG 12 zu entnehmen ist, alle diese Durchflutungen die gleiche Umfangsrichtung und bewirken damit eine feldschwächende Vormagnetisierung des Ankerjoches. Bei einer Ausführung der Teilwicklungen 54 bis 59 als Trommelwicklungen sind alle vom feldschwächenden Strom $I_F$ in diesen sechs Teilwicklungen 54 bis 59 erzeugten Durchflutungen gleichsinnig radial gerichtet, wodurch eine feldschwächende homopolare Vormagnetisierung von Ankerzähnen und/oder Läufer bewirkt wird. Der Transformator 74 ist primär an drei Sättigungsdrosselpaare 76, 77 und 78 angeschlossen, denen Dioden vorgeschaltet sind, die ihrerseits an der Generatorspannung liegen. Je Sättigungsdrosselpaar 76, 77 und 78 sind die Dioden zueinander antiparallel angeordnet. Durch den Transformator 74 erfolgt einerseits die erforderliche Potentialtrennung zwischen der Quelle (Sättigungsdrosselpaare 76 bis 78) des feldschwächenden Stromes $I_F$ und den Teilwicklungen 54 bis 59 sowie andererseits die Anpassung an das für die Speisung dieser Teilwicklungen 54 bis 59 mit dem feldschwächenden Strom $I_F$ erforderliche Spannungsniveau. Ein von einer Anzapfung der Teilwicklung 54 und dem Sternpunkt 72 abgenommener Teil der Generatorspannung wirkt über einen Gleichrichter 80 und die Glättungsdrossel 8 der von der Batterie 7 gelieferten Referenzspannung entgegen. Der die Referenzspannung übersteigende Teil der abgenommenen Generatorteilspannung bildet die Steuerspannung, die den durch die gemeinsame Steuerstromwicklung 49 der Sättigungsdrosseln 76 bis 78 fließenden Steuerstrom $I_V$ erzeugt.

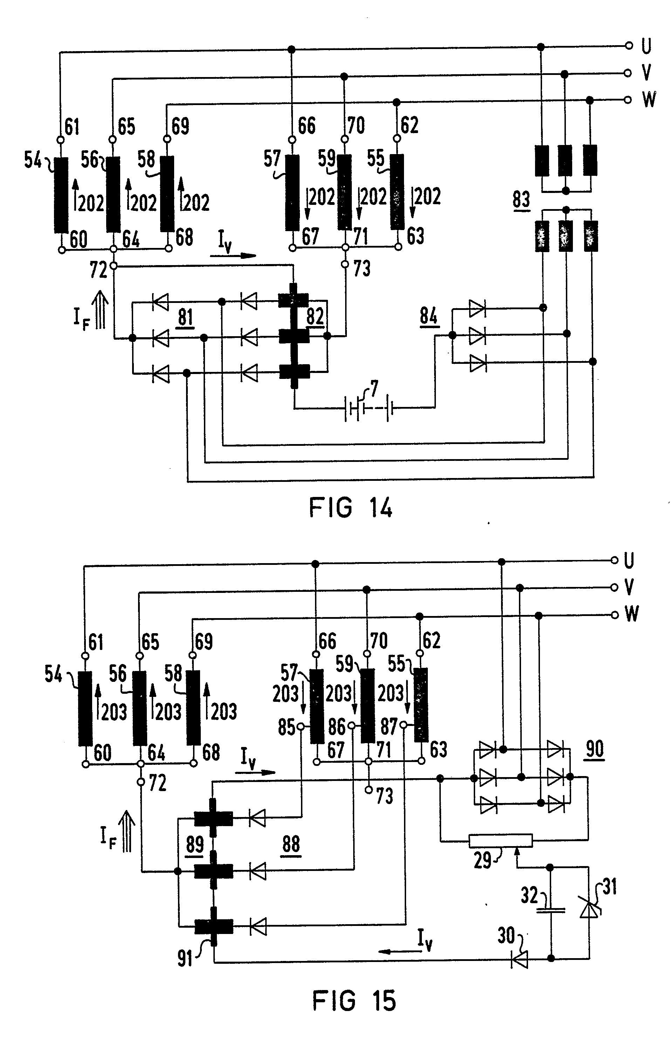

Bei der in FIG 14 dargestellten Anordnung sind die Teilwicklungen nach FIG 12 in der gleichen Art wie nach FIG 13 zusammengeschaltet. Der feldschwächende Strom $I_F$ wird wieder in die Sternpunkte 72 und 73 eingespeist. Er wird von einem dreiphasigen Brückengleichrichter 81 geliefert, dessen eine Hälfte die drei Hauptwicklungen von Sättigungsdrosseln 82 enthält. Der Brückengleichrichter 81 wird von einem Transformator 83 mit einer Spannung versorgt, die durch die in einer Hälfte dieses Brückengleichrichters 81 eingefügten Sättigungsdrosseln 82 entsprechend deren Vormagnetisierung reduziert ist. Drei ebenfalls an den Transformator 83 angeschlossene Dioden 84 bilden zusammen mit der nicht die Hauptwicklungen der Sättigungsdrosseln 82 enthaltenden Hälfte des Brückengleichrichters 81 einen von diesen Sättigungsdrosseln 82 unbeeinflußten Brückengleichrichter, der daher eine der Maschinenspannung verhältnisgleiche Spannung abgibt. Ist diese größer als die Referenzspannung der Batterie 7, so erzeugt der Spannungsüberschuß einen Steuerstrom $I_V$.

Die FIG 15 zeigt eine Anordnung zur Feldschwächung einer Drehstrommaschine, bei der gegenüber den Anordnungen nach den Figuren 13 und 14 die Transformatoren 74 und 83 eingespart sind.

Aus den gemäß FIG 12 angeordneten Teilwicklungen 54 bis 59 sind auch hier zwei ausgangsseitig parallelgeschaltete dreisträngige Wicklungsgruppen mit getrennten Sternpunkten 72 und 73 gebildet. Von Anzapfungspunkten 85, 86 und 87 der Teilwicklungen 57, 59 und 55 wird ein kleiner dreiphasiger Anteil der Maschinenspannung abgenommen und liefert über drei Dioden 88 und drei Sättigungsdrosseln 89 den feldschwächenden Strom $I_F$, der dem Sternpunkt 72 der aus den Teilwicklungen 54, 56, 58 bestehenden Wicklungsgruppe zugeführt wird. Die drei Dioden 88 bilden einen dreiphasigen Einweggleichrichter, dessen abgegebener Strom von der durch den Steuerstrom $I_V$ eingestellten Induktivität der drei Sättigungsdrosseln 89 abhängt. Der feldschwächende Strom $I_F$ verzweigt sich im Sternpunkt 72 und fließt, wie durch Pfeile 203 angedeutet, über die Gesamtheit der Teilwicklungen 54, 56 und 58 und einen Großteil der Teilwicklungen 57, 59 und 55 bis zu den Anzapfungspunkten 85, 86 und 87 zurück, um von da in die Dioden 88 einzutreten. Die durch diesen Strom in den sechs Teilwicklungen 54 bis 59 hervorgerufenen Durchflutungen erzeugen, wie bereits beschrieben, feldschwächende Vormagnetisierungen in aktiven Eisenteilen der Maschine. Von den Dioden 88 aufgenommene Wechselstromanteile fließen größtenteils durch die zwischen den Anzapfungspunkten 85, 86 und 87 und den Sternpunktanschlüssen 67, 71 und 63 liegenden Wicklungsteile und bewirken eine geringfügige, zusätzlich etwas feldschwächende induktive Belastung. Von dem an einen von den Maschinenklemmen U, V, W gespeisten Gleichrichter 90 angeschlossenen Potentiometer 29 wird eine einstellbare, der Maschinenspannung verhältnisgleiche Spannung abgegriffen, deren Überschuß über die Durchbruchspannung der Zener-Diode 31 den Steuerstrom $I_V$ durch die steuerstromwicklungen 91 der Sättigungsdrosseln 89 treibt.

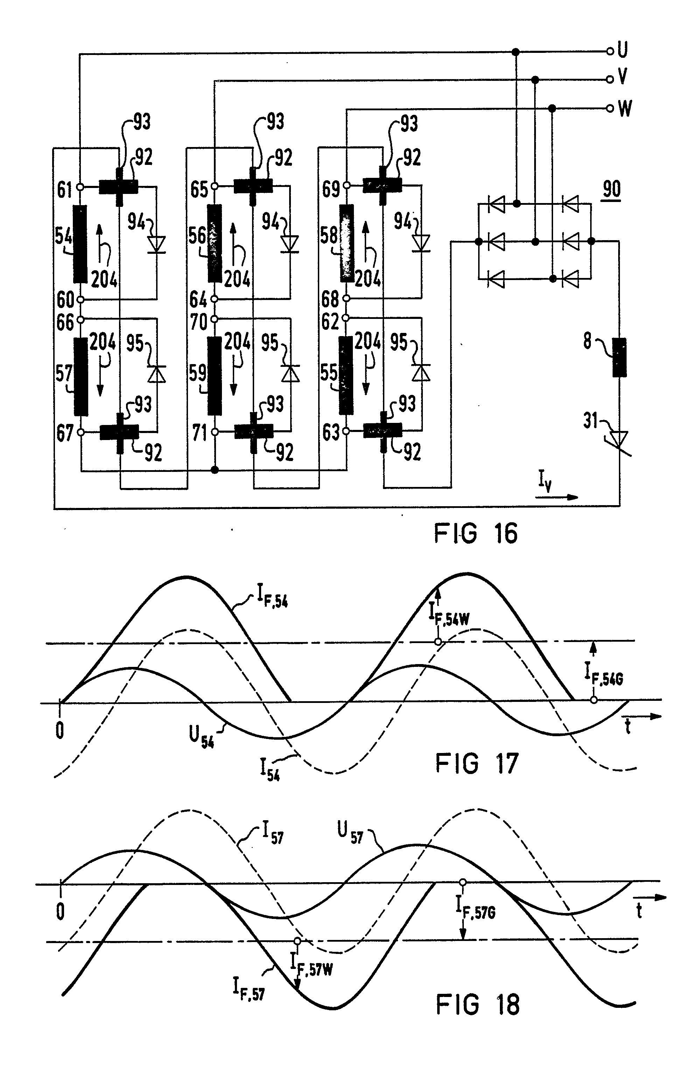

Die Schaltung nach FIG 16 enthält wieder die aus sechs gemäß FIG 12 angeordneten Teilwicklungen 54 bis 59 bestehende Ankerwicklung einer permanentmagneterregten Drehstrommaschine, jedoch sind hier je zwei um eine Polteilung gegeneinander versetzt angeordnete Teilwicklungen 54, 57 bzw. 56, 59 bzw. 58, 55 zu je einem Wicklungsstrang hintereinander geschaltet. Die gesamte Ankerwicklung besteht somit aus den zwei hintereinandergeschalteten, dreisträngigen Wicklungsgruppen 54, 56, 58 und 57, 59, 55, die in der Maschine um eine Polteilung gegeneinander versetzt sind. Zu jeder Teilwicklung ist eine Hauptwicklung 92 einer Sättigungsdrossel und eine mit dieser in Reihe liegende Diode 94. bzw. 95 parallelgeschaltet. Die Dioden 94 und 95 der beiden aus den Teilwicklungen 54, 56, 58 und 57, 59, 55 gebildeten Wicklungsgruppen sind dabei mit gegensinniger Durchlaßrichtung angeordnet. Der Steuerstrom $I_V$ der hintereinander geschalteten Steuerstromwicklungen 93 der Sättigungsdrosseln wird von der Spannungsdifferenz zwischen der Spannung des an den Generatorklemmen U, V, W liegenden Gleichrichters 90 und der Durchbruchspannung der Zener-Diode 31 erzeugt und durchfließt die Glättungsdrossel 8.

In FIG 17 ist der Verlauf des feldschwächenden Stromes $I_{F, 54}$ in der Teilwicklung 54 über der Zeit t dargestellt. Würde die Spannung $U_{54}$ dieser Teilwicklung 54 auf eine Sättigungsdrossel mit konstant angenommener Induktivität ohne vorgeschaltete Diode 94 wirken, so ergäbe sich nur ein nacheilender Wechselstrom $I_{54}$, dessen Verlauf in der FIG 17 gestrichelt eingezeichnet ist. Die Diode 94, die erst bei Auftreten eines positiven Spannungswertes - z.B. ab t = 0 - stromdurchlässig wird, bewirkt, daß anstelle des Wechselstromes $I_{54}$ der Strom $I_{F, 54}$ fließt, der mit gleichem Differentialquotienten nach der Zeit wie der Wechselstrom $I_{54}$ verläuft, jedoch erst bei t = 0 zu fließen beginnt. Er wird wegen des ohmschen Widerstandes des Stromkreises schon vor dem Ende der Spannungsperiode zu Null und bleibt infolge der Sperrwirkung der Diode 94 bis zum Beginn der nächsten Spannungsperiode gleich Null. Danach wiederholt sich sein Verlauf periodisch.

Der Strom $I_{F, 54}$ besteht aus einer Wechselstromkomponente $I_{F,54w}$ mit einer der Spannung $U_{54}$ nacheilenden Grundschwingung und einer Gleichstromkomponente $I_{F, 54G}$, deren Verlauf strichpunktiert eingetragen ist.

Die FIG 18 zeigt den Verlauf des feldschwächenden Stromes $I_{F, 57}$ in der Teilwicklung 57. Die Spannung $U_{57}$ dieser Teilwicklung 57 liegt gleichphasig zu der Spannung $U_{54}$ der Teilwicklung 54, daher hätte auch der Wechselstrom $I_{57}$, der ohne die Diode 95 fließen würde, die gleiche Phasenlage wie der Wechselstrom $I_{54}$ in FIG 17. Durch die gegenüber der Diode 94 gegensinnige Durchlaßrichtung der Diode 95 ergibt sich jedoch ein im Gegensinn zu dem feldschwächenden Strom $I_{F, 54}$ fließender feldschwächender Strom $I_{F, 57}$, der wiederum aus einer Wechselstromkomponente $I_{F, 57w}$ und einer Gleichstromkomponente $I_{F,}$

57G besteht. Die Wechselstromkomponente $I_{F, 57w}$ hat eine mit der Wechselstromkomponente $I_{F, 54w}$ gleichphasige, der Spannung $U_{57}$ der Teilwicklung 57 nacheilende Grundschwingung. Beide Wechselstromkomponenten $I_{F, 54w}$ und $I_{F, 57w}$ bilden somit eine feldschwächende induktive Belastung der Maschine. Die Gleichstromkomponenten $I_{F, 57G}$ und $I_{F, 54G}$ sind jedoch, wie aus den Figuren 17 und 18 ersichtlich, entgegengesetzt gerichtet, was in FIG 16 durch Pfeile 204 angedeutet ist. Das gleiche gilt für die anderen Teilwicklungen 56, 59 bzw. 58, 55. Die von den Gleichstromkomponenten erzeugten Durchflutungen ergeben, wie aus FIG 12 hervorgeht, in Ringwicklungen eine feldschwächende Vormagnetisierung des Ankerjoches und in Trommelwicklungen eine homopolare Vormagnetisierung von Ankerzähnen und Läufer der Maschine.

Durch die in der FIG 16 gezeigte Anordnung wird somit auf zweifache Weise eine feldschwächende Wirkung erzielt, nämlich sowohl durch induktive Belastung als auch durch Vormagnetisierung von aktiven Eisenteilen. Zur Erzielung einer solchen Wirkung kann es gegebenenfalls schon ausreichen, nur eine der Teilwick lungen an eine Sättigungsdrossel mit vorgeschalteter Diode anzuschließen.

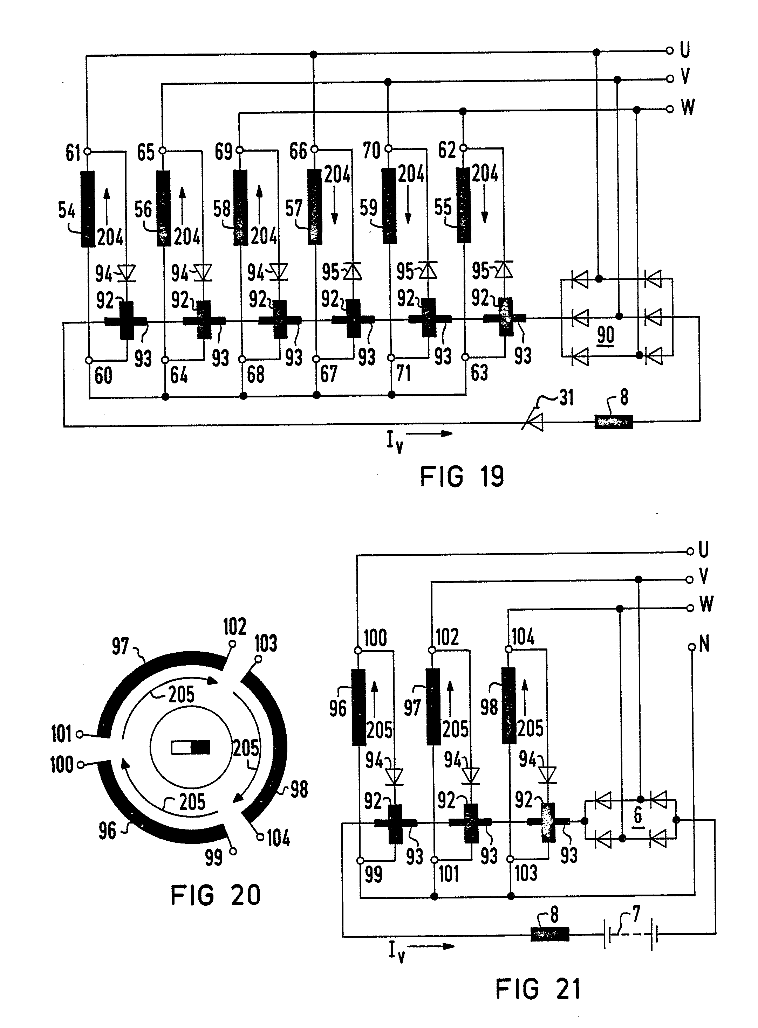

Die FIG 19 zeigt eine Variante der Schaltung nach FIG 16, in dem hier die beiden aus den Teilwicklungen 54, 56, 58 und 57, 59, 55 bestehenden dreisträngigen Wicklungsgruppen, deren Anordnung wieder der FIG 12 entspricht, parallelgeschaltet sind. Die Wirkungsweise der Sättigungsdrosseln mit den vorgeschalteten Dioden 94 und 95 sowie die Ausbildung des Steuerstromkreises dieser Sättigungsdrossel ist die gleiche wie bei der Schaltung nach der FIG 16.

Die FIG 20 stellt die auf zwei benachbarte Polteilungen bezogene Lage von drei je einen Wicklungsstrang bildenden Teilwicklungen 96, 97 und 98 einer Drehstrommaschine mit herausgeführtem Sternpunkt dar. Jede der genannten Teilwicklungen 96 bis 98, der nur eine Wicklungsgruppe enthaltenden Ankerwicklung erstreckt sich über 2/3 einer Polteilung, also über 120° elektrisch. Eine solche Wicklungsausführung wird gewählt, um bereits die Strangspannungen von Oberschwingungen dreifacher Ordnungszahl freizuhalten.

In FIG 21 ist die Schaltung der Teilwicklungen 96 bis 98 mit den parallel angeschlossenen Hauptwicklungen 92 der Sättigungsdrosseln und den diesen vorgeschalteten Dioden 94 dargestellt. Die Wirkungsweise der Feldschwächung ist die gleiche wie bei den Schaltungen nach den FIG 16 und 19. Die Richtung der Gleichstromanteile der feldschwächenden Ströme bzw. der von ihnen erzeugten Durchflutungen ist in den FIG 20 und 21 durch Pfeile 205 angedeutet. Die Steuerstromwicklungen 93 der Sättigungsdrosseln werden über die Glättungsdrossel 8 und die entgegenwirkende Batterie 7 von dem Gleichrichter 6 gespeist, der an die Maschinenklemmen V und W angeschlossen ist und somit eine der Maschinenspannung verhältnisgleiche Spannung abgibt.

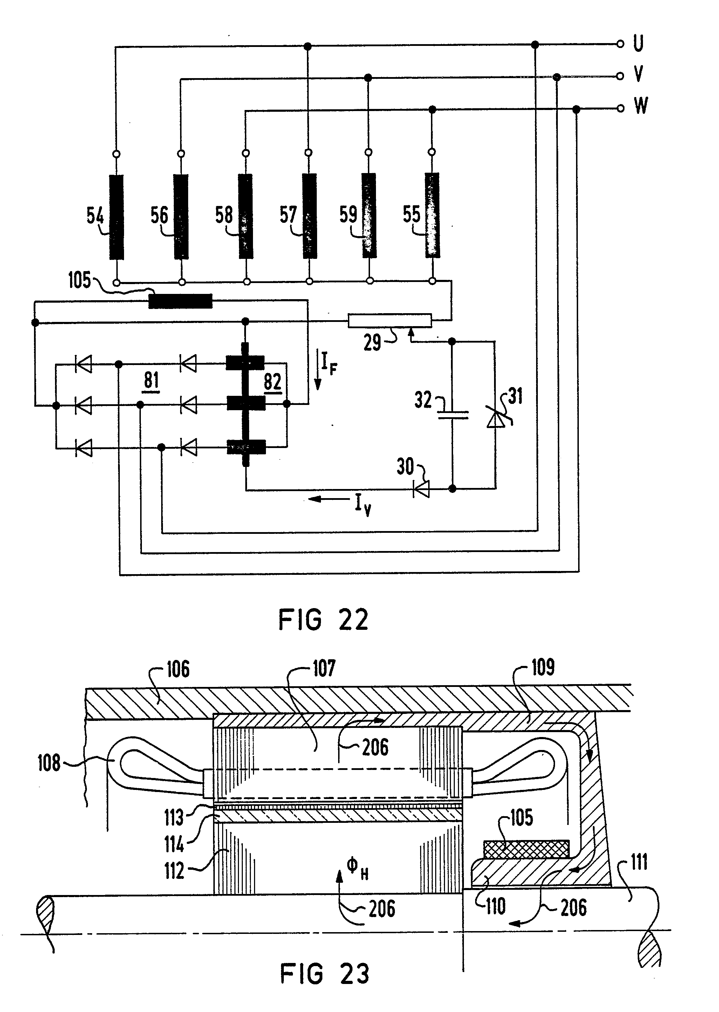

Bei der Anordnung nach der FIG 22 fließt ein durch Vormagnetisierung aktiver Eisenteile der Maschine eine Feldschwächung bewirkender Gleichstrom $I_F$ nicht durch die die Ankerwicklung der Maschine bildenden Teilwicklungen 54 bis 59, sondern durch eine zu der Welle der Maschine koaxial angeordnete ringförmige Wicklung 105, die eine homopolare Durchflutung erzeugt. Diese Wicklung 105 wird vom Brückengleichrichter 81 gespeist, dessen eine Hälfte auch die Sättigungsdrosseln 82 enthält, durch deren Steuerstrom der feldschwächende Strom $I_F$ gesteuert wird. Die den Steuerstrom $I_V$ entgegen der Durchbruchspannung der Zener-Diode 31 erzeugende , der Maschinenspannung verhältnisgleiche Spannung wird einstellbar von Potentiometer 29 abgegriffen. Die diesem Potentiometer 29 zugeführte Spannung wird von der nicht die Sättigungsdrosseln 82 enthaltenden Hälfte des Brückengleichrichters 81 geliefert. Diese Hälfte wirkt als von den Sättigungsdrosseln unbeeinflußter Einweggleichrichter.

Die FIG 23 zeigt die Anordnung der ringförmigen Wicklung 105 in einer Maschine, deren Gehäuse 106 aus einem nicht magnetisierbaren Werkstoff, z.B. Leichtmetall, besteht. Das Ständerblechpaket 107 der Maschine, das die z.B. aus den Teilwicklungen 54 bis 59 gebildete Ankerwicklung 108 enthält, ist von einer im Gehäuse 106 sitzenden, magnetisierbaren Haube 109 umfaßt, deren Stirnteil einen hohlzylinderischen Ansatz 110 aufweist, der über einen Luftspalt mit der Welle 111 magnetisch verbunden ist. Am Außenumfang des Ansatzes 110 ist die ringförmige Wicklung 105 aufgebracht. Ihre Durchflutung erzeugt einen feldschwächenden Homopolarfluß $\Phi_H$, der, wie durch Pfeile 206 angedeutet, die Welle 111, das Läuferblechpaket 112 der Maschine und die durch eine Bandage 113 auf diesem gehaltenen Magnete 114 sowie das Ständerblechpaket 107 durchsetzt, um sich durch die Haube 109 und ihren Ansatz 110 über den Luftspalt zur Welle 111 zu schließen.

Wenn das Gehäuse 106 und mindestens ein Lagerschild der Maschine aus magnetisch leitfähigem Werkstoff bestehen, kann die Haube 109 entfallen und der Ansatz 110 der Haube 109 durch einen gleichartigen, die ringförmige Wicklung 105 tragenden Ansatz an diesem Lagerschild ersetzt werden. Sind außer dem Gehäuse 106 beide Lagerschilde magnetisch leitfähig, so kann die ringförmige Wicklung 105 geteilt und zu beiden Seiten des Ständerblechpaketes 107 auf entsprechenden Ansätzen der Lagerschilde angeordnet werden.

Der vorstehend beschriebene, über das Gehäuse, mindestens ein Lagerschild, die Welle und den Läufer der Maschine führende magnetisch leitfähige Weg für einen Homopolarfluß oder der in FIG 23 gezeigte magnetisch leitfähige Weg wird auch vorgesehen, wenn ein feldschwächender Homopolarfluß ohne die gesonderte ringförmige Wicklung 105 von der Ankerwicklung der Maschine selbst erzeugt wird, wie dies bei den Anordnungen nach den Figuren 13 bis 16 sowie 19 und 21 der Fall ist.

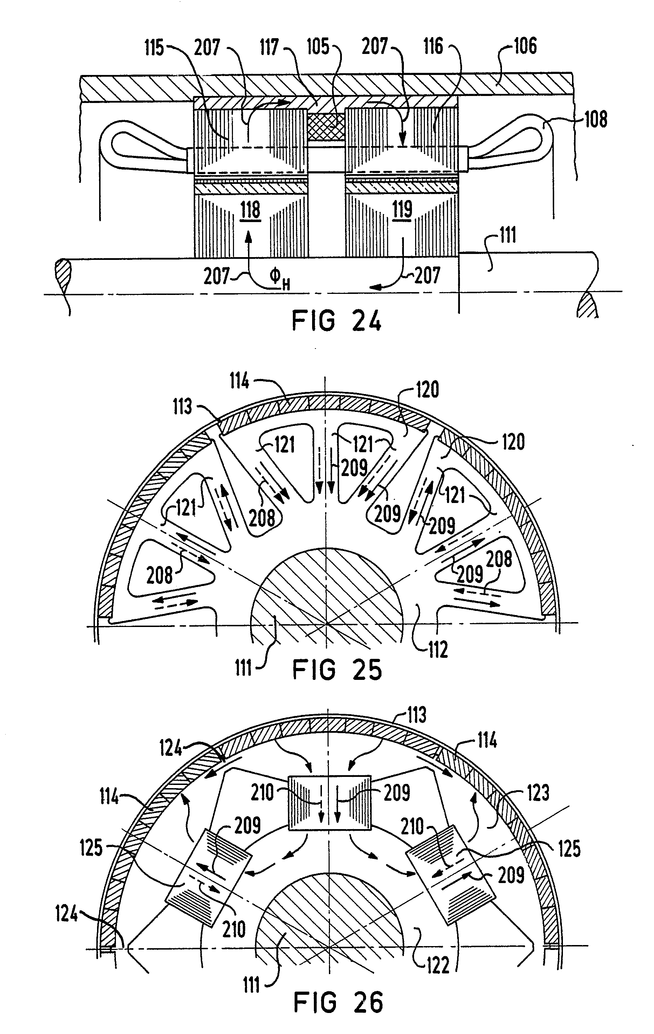

In FIG 24 ist eine andere Anordnung für die ringförmige Wicklung 105 gezeigt. Es sind zwei getrennte Ständerblechpakete 115 und 116 vorgesehen, die die gemeinsame Ankerwicklung 108 enthalten und in einer magnetisierbaren Zwischenhülse 117 oder bei magnetisierbarem Gehäuse 106 unmittelbar in diesem sitzen. Zwischen den beiden Ständerblechpaketen 115 und 116 ist die ringförmige Wicklung 105 angeordnet. Ihre vom feldschwächenden Strom $I_F$ herrührende Durchflutung erzeugt einen Homopolarfluß $\Phi_H$, der durch die beiden Ständerblechpakete 115 und 116, die Zwischenhülse 117, die beiden ebenfalls getrennten Läuferhälften 118 und 119 und die Welle 111 verläuft, wie durch Pfeile 207 angedeutet.

Eine ausgeprägt feldschwächende Wirkung einer homopolaren Durchflutung ergibt sich, wenn die Zähne des Ständerblechpaketes in ihrem Querschnitt so bemessen sind, daß sie von den Permanentmagnetflüssen allein - also ohne homopolare Durchflutung - be reits bis zum Sättigungsbeginn magnetisiert sind. Eine homopolare Durchflutung kann dann die mit ihr in diesen Zähnen gleichsinnig verlaufenden permanentmagnetischen Polflüsse des Läufers nicht nennenswert verstärken, aber die gegensinnigen Polflüsse durch Entsättigung der betreffenden Zähne beträchtlich schwächen. Die Gesamtheit der die Ankerwicklung induzierenden Magnetflüsse nimmt dementsprechend ab.

Die feldschwächende Wirkung einer homopolaren Durchflutung in den Zähnen des Ständerblechpaketes wird ergänzt, wenn Teile des Läufers, in denen die Permanentmagnetflüsse und ein Homopolarfluß parallel überlagert verlaufen, in ihrem Querschnitt so bemessen sind, daß sie von den Permanentmagnetflüssen allein bereits bis zum Sättigungsbeginn magnetisiert sind.

Die FIG 25 zeigt einen Querschnitt durch einen dementsprechend ausgebildeten sechspoligen Läufer. Das auf der Welle 111 sitzende Läuferblechpaket 112 ist in sechs Pole 120 untergliedert, auf die luftspaltseitig quaderförmige Magnete 114 aufgeklebt und von einer Bandage· 113 umgeben sind. Eine homopolare Durchflutung verläuft in allen Polen radial gleichsinnig, z.B. in allen Armen 121 des Blechpaketes 112 von außen nach innen, wie durch gestrichelte Pfeile 208 angedeutet ist. Die Permanentmagnetflüsse sind jedoch in benachbarten Polen gegensinnig gerichtet, wie dies die voll gezeichneten Pfeile 209 anzeigen. Dadurch sind die Arme 121 eines Poles von der homopolaren Durchflutung gleichsinnig mit dem Permanentmagnetfluß, in einem benachbarten Pol jedoch gegensinnig zu diesem Permanentmagnetfluß magnetisiert. Sind die Magnete 114 und der Querschnitt der Arme 121 so bemessen, daß letztere bereits vom Permanentmagnetfluß allein bis zum Sättigungsbeginn magnetisiert sind, so kann ihre Magnetisierung von einer gleichsinnigen homopolaren Durchflutung nicht nennenswert verstärkt, von einer gegensinnigen Durchflutung jedoch beträchtlich geschwächt werden, was eine Verminderung der Summe aller induzierenden Polflüsse ergibt. Die Differenz zwischen den durch eine homopolare Durch flutung nur sehr wenig verstärkten und den durch sie viel stärker geschwächten Polflüssen wird als Homopolarfluß durch die Welle 111 vom Läuferblechpaket 112 abgezweigt.

In FIG 26 ist eine andere Ausbildung eines sechspoligen Läufers dargestellt. Bei dieser Ausbildung wird die Feldschwächung durch eine homopolare Durchflutung gegenüber dem in FIG 25 gezeigten Läufer in verstärktem Maße erzielt und gleichzeitig eine Verminderung des Magnetaufwandes erreicht. Auf der Welle 111 ist ein innerer Blechpaketring 122 angeordnet, der von einem äußeren, die Pole bildenden Blechpaketring 123 radial getrennt ist. Am Umfang des äußeren Blechpaketringes 123 sind analog zu dem Läufer nach der FIG 25 Magnete 114 angebracht. Ein kleiner Teil der Permanentmagnetflüsse verläuft innerhalb des äußeren Blechpaketringes 123 durch die radial schmal gehaltenen Stege 124. Der größte Teil der Permanentmagnetflüsse nimmt seinen Weg radial durch die zwischen dem inneren und dem äußeren Blechpaketring 122 und 123 angeordneten Blechpaketblöcke 125, die im Hinblick auf ihre Montage zweckmäßig quer zu den erstgenannten, d.h. parallel zur Welle 111 geblecht sind. Die Blechpaketblöcke 125 bestehen aus einem Werkstoff mit rechteckiger Hystereseschleife und sind so bemessen, daß sie von den Permanentmagnetflüssen allein bis zum Sättigungsknick magnetisiert sind. Da dies nur eine sehr geringe Durchflutung erfordert, wird ein Großteil jenes Aufwandes für die Magnete 114, der bei der Anordnung nach FIG 25 für die Sättigung der Arme 121 erforderlich ist, eingespart. Eine homopolare Durchflutung (gestrichelte Pfeile 210) wirkt in den Blechpaketblöcken 125 bei drei Polen gleichsinnig und bei den anderen drei Polen gegensinnig zum Permanentmagnetfluß (Pfeile 209), was die erläuterte Feldschwächung ergibt. Sie ist hier deshalb sehr wirksam, weil bei bis zum Sättigungsknick magnetisierten Werkstoffen mit rechteckiger Hystereseschleife eine gleichsinnige Zusatzdurchflutung praktisch keine Flußverstärkung ergibt, dagegen bereits eine geringe gegensinnige Durchflutung eine starke Flußminderung bewirkt.

## Ansprüche

1. Permanentmagneterregte elektrische Maschine mit einer Anordnung zur elektrischen Feldschwächung, **dadurch gekennzeichnet,** daß mindestens ein Stromkreis vorgesehen ist, der einen feldschwächenden, von einer Wechselspannungsquelle herrührenden Strom ($I_F$) führt und eine von diesem Strom durchflossene, in ihrer Induktivität veränderlich steuerbare Sättigungsdrossel (4, 25, 26, 27, 49, 50) enthält, deren Steuerstrom ($I_V$) von dem als Steuerspannung wirkenden Teil, um den eine von der in der Maschine induzierten und gleichgerichteten Spannung proportional abgeleitete Spannung eine entgegenwirkende Referenzspannung übersteigt, erzeugt ist.

2. Elektrische Maschine nach Anspruch 1, **durch gekennzeichnet,** daß als Referenzspannung die Spannung einer Batterie (7) vorgesehen ist.

3. Elektrische Maschine nach Anspruch 1, **durch gekennzeichnet,** daß als Referenzspannung die Durchbruchspannung zumindest einer Zenerdiode (31) vorgesehen ist.

4. Elektrische Maschine nach einem oder mehreren der vorhergehenden Ansprüche, **dadurch gekennzeichnet,** daß zum Einstellen der der Referenzspannung entgegenwirkenden Spannung ein Potentiometer (29) mit verstellbarem Abgriff vorgesehen ist.

5. Elektrische Maschine nach einem oder mehreren der Ansprüche 1 bis 3, **dadurch gekennzeichnet,** daß zum Einstellen der der Referenzspannung entgegenwirkenden Spannung ein an die Maschine angeschlossener Transformator (52) mit veränderbarer Übersetzung vorgesehen ist.

6. Elektrische Maschine nach einem oder mehreren der vorhergehenden Ansprüche, **dadurch gekennzeichnet,** daß zu der Referenzspannungsquelle ein Glättungskondensator (32) parallelgeschaltet ist.

7. Elektrische Maschine nach Anspruch 6, **dadurch gekennzeichnet,** daß der Referenzspannungsquelle und dem zu ihr parallelgeschalteten Glättungskondensator (32) eine in Richtung des Steuerstromes ($I_V$) durchlässige Diode (30) vorgeschaltet ist.

8. Elektrische Maschine nach einem oder mehreren der vorhergehenden Ansprüche, **dadurch gekennzeichnet,** daß für zumindest einen feldschwächenden Strom ($I_F$) als Wechselspannungsquelle die Maschine selbst vorgesehen ist.

9. Elektrische Maschine nach einem oder mehreren der vorhergehenden Ansprüche, **dadurch gekennzeichnet,** daß für zumindest einen feldschwächenden Strom ($I_F$) eine Wechselspannungsquelle außerhalb der Maschine vorgesehen ist.

10. Elektrische Maschine nach einem oder mehreren der vorhergehenden Ansprüche, **dadurch gekennzeichnet,** daß bei Verwendung mehrerer Sättigungsdrosseln (89) deren Steuerstromwicklungen (91) hintereinandergeschaltet sind.

11. Elektrische Maschine nach einem oder mehreren der vorhergehenden Ansprüche, **dadurch gekennzeichnet,** daß bei Verwendung von mehreren Sättigungsdrosseln (49, 50; 76, 77, 78; 82) diese mit einer gemeinsamen Steuerstromwicklung (17; 51; 79) versehen sind.

12. ELektrische Maschine nach einem oder mehreren der vorhergehenden Ansprüche, **dadurch gekennzeichnet,** daß mindestens zwei Sättigungsdrosseln einen gemeinsamen, die Steuerstromwicklung (17) tragenden und betriebsmäßig ungesättigt bleibenden Kern (20) aufweisen.

13. Elektrische Maschine nach einem oder mehreren der vorhergehenden Ansprüche, **dadurch gekennzeichnet,** daß eine vom Steuerstrom ($I_V$) durchflossene, von den Sättigungsdrosseln (4; 76, 77, 78) magnetisch getrennte und betriebsmäßig ungesättigt bleibende Glättungsdrossel (8) vorgesehen ist.

14. Elektrische Maschine nach einem oder mehreren der Ansprüche 1 bis 12, **dadurch gekennzeichnet,** daß bei zumindest einer Sättigungsdrossel magnetische Streupfade (21) zur Glättung des Steuerstromes ($I_V$) vorgesehen sind (FIG 8).

15. Elektrische Maschine nach einem oder mehreren der vorhergehenden Ansprüche, **dadurch gekennzeichnet,** daß der von einem feldschwächenden Strom ($I_F$) durchflossenen Hauptwicklung (13, 14) zumindest einer Sättigungsdrossel eine Diode (15, 16) derart vorgeschaltet ist, daß diese Hauptwicklung nur einen im Sinne der Vormagnetisierung des von ihr umgebenen Kernes (18, 19) wirkenden Strom führt.

16. Elektrische Maschine nach Anspruch 15, **dadurch gekennzeichnet,** daß sättigbare Teile der Sättigungsdrosseln (25 - 27; 49, 50; 76 - 78; 82; 89) aus einem weichmagnetischen Werkstoff mit rechteckiger Hystereseschleife bestehen.

17. Elektrische Maschine nach Anspruch 8 und einem der Ansprüche 15 und 16, **dadurch gekennzeichnet,** daß zumindest zu einer Teilwicklung (54) der Ankerwicklung der Maschine die Hauptwicklung (92) einer Sättigungsdrossel zusammen mit einer zu ihr in Reihe liegenden Diode (94) parallelgeschaltet ist.

18. Elektrische Maschine nach Anspruch 17, **dadurch gekennzeichnet,** daß zu mehreren Teilwicklungen (54 -59) je eine Hauptwicklung (92) einer Sättigungsdrossel zusammen mit einer zu ihr in Reihe liegenden Diode (94, 95) parallelgeschaltet ist, wobei jene Dioden (94, 95) die mit um eine Polteilung gegeneinander versetzt angeordneten Teilwicklungen (54, 57) verbunden sind, in bezug zueinander gegenphasig an diese Teilwicklungen (54, 57) angeschlossen sind.

19. Elektrische Maschine nach einem oder mehreren der vorhergehenden Ansprüche 1 bis 16, **dadurch gekennzeichnet,** daß ein aus mindestens zwei diodenbestückten Zweigen bestehender Gleichrichter (48; 75; 81; 88) vorgesehen ist, der die von Sättigungsdrosseln (49, 50; 76 - 78; 82; 89) fallweise über einen Transformator (74) gelieferten Ströme in einen feldschwächenden Gleichstrom ($I_F$) umformt.

20. Elektrische Mschine nach Anspruch 19, **dadurch gekennzeichnet,** daß die Hauptwicklungen von Sättigungsdrosseln (49, 50; 82; 89) in Zweigen des Gleichrichters (48, 87, 88) selbst angeordnet sind.

21. Elektrische Maschine nach einem der Ansprüche 19 und 20, **dadurch gekennzeichnet,** daß der Gleichrichter (84) für den Steuerstrom ($I_V$) zumindest teilweise mit dem den feldschwächenden Strom ($I_F$) liefernden Gleichrichter (81) wirkungsmäßig vereinigt ist (FIG 14).

22. Elektrische Maschine nach einem oder mehreren der Ansprüche 19 bis 21, **dadurch gekennzeichnet,** daß die Ankerwicklung aus zwei parallelgeschalteten Wicklungsgruppen gebildet ist, von denen jede eine aus zwei hintereinandergeschalteten und um eine Polteilung gegeneinander versetzt angeordneten Teilwicklungen (33, 34 bzw. 35, 36) bestehende Einphasenwicklung ist, daß sich jede dieser Teilwicklungen (33 bis 36) nur über von gleichpoligen induzierenden Magnetfeldern durchsetzte Teile des Ankerumfanges erstreckt und auch die an gemeinsamen Ausgangsklemmen (U1 bzw. U2) liegenden Teilwicklungen (34, 36 bzw. 33, 35) um eine Polteilung gegeneinander versetzt angeordnet sind, daß ferner ein feldschwächender Gleichstrom ($I_F$) in die hinsichtlich der induzierten Wechselspannungen äquipotentialen Verbindungspunkte (46, 47) der hintereinandergeschalteten Teilwicklungen (33, 34 bzw. 35, 36) eingespeist ist.

23. Elektrische Maschine nach einem oder mehreren der Ansprüche 19 bis 21, **dadurch gekennzeichnet,** daß die Ankerwicklung aus zwei parallelgeschalteten Wicklungsgruppen gebildet ist, von denen jede eine aus drei Teilwicklungen (54, 56, 58 bzw. 57, 59, 55) bestehende, in Stern geschaltete Drehstromwicklung ist, daß sich jede dieser Teilwicklungen (54 bis 59) nur über von gleichpoligen induzierenden Magnetfeldern durchsetzte Teile des Ankerumfanges erstreckt und die an gemeinsamen Ausgangsklemmen U bzw. V bzw. W) liegenden Teilwicklungen (54, 57 bzw. 56, 59 bzw. 58, 55) beider Wicklungsgruppen um eine Polteilung gegeneinander versetzt angeordnet sind und daß ein feldschwächender Gleichstrom ($I_F$) in die hinsichtlich der induzierten Wechselspannungen äquipotentialen getrennten Sternpunkte (72, 73) der beiden Wicklungsgruppen eingespeist ist.

24. Elektrische Maschine nach einem oder mehreren der Ansprüche 19 bis 21, **dadurch gekennzeichnet,** daß an einer Seite des Ständerblechpaketes (107) der Maschine eine vom feldschwächenden Gleichstrom ($I_F$) gespeiste ringförmige Wicklung (105) koaxial zur Welle (111) der Maschine angeordnet ist.

25. Elektrische Maschine nach einem oder mehreren der Ansprüche 19 bis 21, **dadurch gekennzeichnet,** daß zu beiden Seiten des Ständerblechpaketes (107) der Maschine je eine vom feldschwächenden Gleichstrom ($I_F$) gespeiste ringförmige Wicklung (105) koaxial zur Welle (111) der Maschine angeordnet ist.

26. Elektrische Maschine nach einem oder mehreren der Ansprüche 19 bis 21, **dadurch gekennzeichnet,** daß zwei getrennte, eine gemeinsame Ankerwicklung (108) aufweisende Ständerblechpakete (115, 116) mit axialem Abstand zueinander vorgesehen sind und in dem Zwischenraum zwischen den Ständerblechpaketen (115, 116) eine vom feldschwächenden Gleichstrom ($I_F$) gespeiste ringförmige Wicklung (105) koaxial zur Welle (111) der Maschine angeordnet ist und daß die beiden Ständerblechpakete (115, 116) an ihrem Umfang durch ein diese Wicklung umgebendes Teil (106 bzw. 117) magnetisch leitfähig verbunden sind.

27. Elektrische Maschine nach einem oder mehreren der Ansprüche 18 bis 25, **dadurch gekennzeichnet,** daß das Gehäuse, mindestens ein Lagerschild, die Welle und Läuferteile der Maschine aus magnetisierbarem Werkstoff bestehen und durch diese Maschinenteile ein magnetisch leitfähiger Weg für einen vom feldschwächenden Gleichstrom ($I_F$) erzeugten Homopolarfluß gebildet ist.

28. Elektrische Maschine nach einem oder mehreren der Ansprüche 18 bis 25, **dadurch gekennzeichnet,** daß durch eine das Ständerblechpaket (107) innerhalb des Gehäuses (106) umgreifende, aus magnetisierbarem Material bestehende Haube (109), deren Stirnteil durch einen hohlzylindrischen Ansatz (110) mit der Welle (111) magnetisch verbunden ist, ein magnetisch leitfähiger Weg für den von einem feldschwächenden Gleichstrom ($I_F$) erzeugten Homopolarfluß gebildet ist.

29. Elektrische Maschine nach einem oder mehreren der Ansprüche 18 bis 28, **dadurch gekennzeichnet,** daß die Zähne des Ständerblechpaketes (107) bzw. der getrennten Ständerblechpakete (115, 116) in ihrem Querschnitt so bemessen sind, daß sie durch die Permanentmagnetflüsse allein bis zum Sättigungsbeginn magnetisiert sind.

30. Elektrische Maschine nach einem oder mehreren der Ansprüche 18 bis 29, **dadurch gekennzeichnet,** daß Teile (121, 125) des Läufers der Maschine, in denen die Permanentmagnetflüsse und ein vom feldschwächenden Gleichstrom ($I_F$) erzeugter Homopolarfluß parallel überlagert verlaufen, in ihrem Querschnitt so bemessen sind, daß sie durch die Permanentmagnetflüsse allein bis zum Sättigungsbeginn magnetisiert sind.

31. Elektrische Maschine nach Anspruch 30, **dadurch gekennzeichnet,** daß Teile (125) des Läufers, in denen die Permanentmagnetflüsse und ein vom feldschwächenden Gleichstrom ($I_F$) erzeugter Homopolarfluß parallel überlagert verlaufen, aus einem Werkstoff mit rechteckiger Hystereseschleife bestehen und in ihrem Querschnitt so bemessen sind, daß sie durch die Permanentmagnetflüsse allein bis zum Sättigungsknick dieses Werkstoffes magnetisiert sind.

FIG 1

FIG 2

FIG 3

FIG 4

FIG 5

FIG 6

FIG 7

FIG 8

EP 0 343 458 A1

FIG 9

FIG 10

FIG 11

FIG 12

FIG 13

FIG 14

FIG 15

FIG 16

FIG 17

FIG 18

FIG 19

FIG 20

FIG 21

FIG 22

FIG 23

FIG 24

FIG 25

FIG 26

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 221 375  (LOHER GmbH)<br>* Insgesamt *<br>--- | 1 | H 02 P    9/34 |
| A | DE-B-  197 550  (HANSA-MOTORENFABRIK)<br>----- | | |

RECHERCHIERTE
SACHGEBIETE (Int. Cl.4)

H 02 P

Der vorliegende Recherchenbericht wurde für alle Patentansprüche erstellt

| Recherchenort | Abschlußdatum der Recherche | Prüfer |
|---|---|---|
| DEN HAAG | 01-08-1989 | BEYER F. |

EPO FORM 1503 03.82 (P0403)